# EUROPEAN PATENT SPECIFICATION

(11) **EP 0 623 199 B1**
(45) Date of publication and mention of the grant of the patent: **23.10.1996**
(21) Application number: 93902416.2
(22) Date of filing: 20.01.1993
(51) Int. Cl.: F16L 5/02, H02G 15/013

(54) **SEALING ARRANGEMENT**
ABDICHTUNGSVORRICHTUNG
MONTAGE D'ETANCHEITE

(30) Priority: 24.01.1992 GB 9201557
(43) Date of publication of application: 09.11.1994
(73) Proprietor: WALTER ROSE GmbH & Co. KG, D-58093 Hagen (DE)
(72) Inventor: PENZ, Heinz, D-5800 Hagen (DE)
(74) Representative: Benson, John Everett
(86) International application number: GB9300117
(87) International publication number: WO9315346

(56) References cited:
- EP-A- 0 392 266
- EP-A- 0 440 903
- WO-A-89/10021

## Description

This invention relates to a sealing arrangement for sealing the open end of a conduit to an elongate object, such as a cable or a pipe that is led therethrough, and especially to a mechanical sealing arrangement comprising a hinged tubular housing that can be closed by a channel shaped closure. and which contains a sealing material, for example a mastic.

There are many applications where it is necessary to seal the open end of a conduit that is to carry an elongate object.
Environmental sealing to form a moisture and gas tight seal is typically required. For example, a single cable or pipe may be fed into a duct and a seal be required between the cable or pipe and the duct. Another example is provided where a plurality of cables are fed through individual tubular outlets into a housing, within which they are to be spliced to each other or to another cable. For example where a single large capacity communications cable is to be spliced to a plurality of smaller distribution cables. eg a single 2000 pair cable to twenty 100 pair cables, the small cables are led into a large cylindrical housing (known as a vault closure) through individual tubular cable-entry-outlets projecting from the base on one side of the cylindrical housing and the large cable is fed into the other side of the cylindrical housing. Each cable must be sealed to its respective cable entry outlet and this presents particular problems for the small cables, because the cable entry outlets are closely spaced. A similar sealing arrangement is required in splicing situations where all the cables enter a housing on one side of the housing, eg through cable entries in a base of a dome shaped housing.

A variety of sealing arrangements have been proposed for sealing the end of a conduit in the prior art. For example. for sealing cables entering a vault closing. the known sealing solution involves inserting the cables, then positioning heat shrinkable sleeves on the cable entry tubular openings, and shrinking them onto the cables.

As well as the heat shrinkable solution described above; mechanical sealing arrangements are known for sealing the open end of a conduit. EP-A-0 440 903, DE 3739714 and DE 3863777 (WR116 DE1 and WR116 DE2), for example, describe a mechanical arrangement for sealing a cable entry to a duct. The known mechanical arrangement comprises a tubular housing in the form of two half shells which are hinged together at one side, and which are held together by a channel shaped member engaging longitudinal flanges on the other side. The hinging is by a film-hinge, that is a longitudinal slit in the tubular housing. The entire disclosures of DE 3739714 and DE 3863777 (WR116 DE1 and WR116 DE2) are incorporated herein by reference.

A duct cable entry sealing device embodying some of the disclosure of DE 3739714 and DE 3863777 has also been sold under the trade name EZAM by the Applicant of the present invention. The product sold incorporates a hinging element comprising interlocking rollers and hooks, rather than a film hinge. It also incorporates a polymeric channel closure which projects a significant height above the tubular body of the housing in order to achieve a sufficient closure force on the housing.

It is an object of the present invention to provide a strong mechanical sealing arrangement similar to that described in DE 3739714 and DE 3863777 (WR116 DE1 and WR116 DE2), but which has a strong but substantially flat closure mechanism, and preferably also hinging mechanism. The sealing arrangement of the present invention is particularly useful in applications where sealing space is limited, for example for sealing the cable entries into a vault closure where adjacent seals are close to each other and space is limited. The present invention provides a mechanical sealing arrangement which could be used in that and similar applications as an alternative to the shrinkable solution currently used.

Thus, the present invention provides a sealing arrangement for sealing the open end of a conduit to an elongate object, such as a cable or pipe, that is led therethrough, the arrangement comprising (a) a divided tubular housing, that is slit longitudinally to form two or more half- or part-shells, and is hinged along one longitudinal slit to allow the housing to be opened, (b) a channel shaped closure member which, in use, holds together upstanding flanges on abutting edges of the slit housing to close the housing and (c) sealing material contained within the housing, a locking member being provided within the channel shaped closure member, which can be moved from a first position, in which the channel shaped closure member can be moved along the upstanding flanges on the housing, to a second position in which the locking member firmly secures the channel shaped closure member relative to the flanges of the housing, the locking member comprising a screw threaded element which can be rotated to secure the channel shaped closure member to the housing flanges, characterised in that at least one of the housing flanges comprises threaded grooves which engage the turns of the screw threaded element when the screw threaded element is rotated.

We have found that the inclusion of one or more locking members as claimed in our invention significantly improves the strength of our closure. This accordingly allows a flat profiled closure to be produced, while maintaining sufficient closure strength. This has particular advantages where space is limited.

The locking member is a screw threaded element, for example a standard screw, which when rotated engages the upstanding flanges on the housing body. At least one of the housing flanges comprises corresponding threaded grooves which cooperate with the screw element firmly to secure the channel to the housing, when the screw is rotated. The grooves on the flange are preferably on an outward- or sideways-facing surface of the upstanding flange. Preferably the screw threaded element is pre-secured within the channel, for example to one side of the channel. With this arrangement it is possible to provide a secure closure with an upstanding flange and channel and screw arrangement which projects a distance above the housing that is less than 1/₄, preferably less than 1/₆ of the outer diameter of the tubular bodv of the housing. Preferably the channel and flanges extend less than 15mm, more preferably less than 10mm, espec1ally less than 8mm above the tubular bodv of the housing

Preferably a single locking member, for example a single screw, is used in the present invention positioned, as described above, within and to one side of the channel. However, in other embodiments, two or more locking members may be used. For example, two screw elements, one on each side of the channel may be used, preferably both within the channel. Also screw elements, could be introduced from either end of the channel. Up to four screw elements could be used in that way. Where screw elements are provided on both sides of the channel, corresponding grooves are preferably provided on the opposing faces of both of the upstanding flanges.

The upstanding flanges and the cooperating channel closure are generally wedge shaped, that is they are wider at one end than at their other end. This is known and described in DE 3739714 and DE 3863777 (WR116 DE1 and WR116 DE2). According to the present invention the upstanding flanges on the housing preferably also comprise cooperating features substantially to prevent relative axial movement of the abutting parts of the housing. For example a projecting stub on one flange may cooperate with a groove on the opposing flange.

The sealing arrangement according to the present invention is hinged so that it can be opened for positioning around the objects to be sealed. Preferably the hinging is provided by a separate hinging element. This may be in the form of an apertured strip which extends along the outer surface of the housing and is preferably flexible. The strip preferably extends along abutting edges of the housing. Preferably rivet shaped stubs on the housing edges pass through the apertures in the hinging element to secure the housing to the strip and thereby provide the hinging mechanism. This arrangement provides a low-profile, but strong hinging arrangement. This hinging arrangement can be used for a wide varietv of materials for the housing, including our preferred material which is a reinforced polymeric material. preferably a fibre-reinforced polymeric material. In contrast a film hinge, as described in DE 3739714 and DE 3863777 (VR116 DE1 and WR116 DE2) can not successfully be used with a film hinging arrangement since such materials fracture under bending loads. which they are subjected to in a film hinging arrangement.

A preferred material for the housing is a fibre reinforced especially thermoplastic polymer. Any material, especially a polymer, for example polyethylene can be used for the separate hinging strip.

With the above hinging arrangement. the thickness of the hinging strip is preferably less than ¹/₁₀ especially less than ¹/₁₅ of the outer diameter of the tubular body of the housing. Preferably the thickness of the hinging strip is less than 4mm especially less than 2.5mm. Thus a flat overall profile is produced. This is advantageous in applications where space is limited.

The housing of the present invention is divided to form two or more half- or part-shells. The most preferred configuration is two half-shells which abut together to form the tubular closure. The hinging element preferably joins the half-shells on one side of the closure. This hinging element is preferably applied in the factory so that the housing can be opened about the hinge in the field. The channel is preferably diametrically opposite the hinge, joining the half-shells together on the other side of the closure. The channel is preferably applied in the field by the sealing installer. Instead of half-shells the housing may comprise more than two longitudinal slits. eg three or more mating part-shells may be used. In this case corresponding additional hinges and/or channel closures may be used.

As in DE 3739714 and DE 3863777 (WR116 DE1 and WR116 DE2), the sealing arrangement of the present invention preferably comprises a sealing material. This is preferably a mastic.

In the present invention longitudinal displacement of the sealing material is preferably substantially prevented by the positioning of retaining walls on one, and preferably on both, sides of the sealing material. The retaining walls preferably contain openings to allow passage of the elongate objects therethrough. Slots may be provided in one or both the retaining walls, extending outwards from the openings. One advantage of the slots is that it can allow the walls to flex to accommodate the inserted elongate objects. In this way the openings in the retaining walls may be slightly smaller than the elongate objects. Minimising the size of the openings is advantageous for optimum retention of the sealing material. Another advantage of the slotted configuration is that it may provide strain relief on the inserted elongate objects.

The retaining walls which, to fit in a tubular housing, are preferably disc-shaped, may preferably be detachably mounted. For example, they may be located in grooves in the housing. This detachability is novel, and allows different retaining walls to be selected by the installer in the field, and incorporated in a standard housing, the selection depending on the size and number of elongate objects to be sealed. Each retaining wall is preferably divided, ie provided in two or more parts, so that one part is located in each half- or part-shell. Thus the parts can be separated to allow insertion of the elongate objects to be sealed.

The retaining wall(s) may contain a single aperture, for example, centrally positioned for receiving a single elongate object. This may, for example, be between two mating parts of the divided retaining wall. Instead the wall(s) may contain two or more apertures. either within the wall, or at one edge of the wall, ie as indents from the edge of the retaining wall, for receiving a plurality of cables. In general therefore appropriate retaining wall(s) are chosen for the size and number of elongate objects to be received. The size of the opening(s) should be sufficiently large to receive the maximum diameter of elongate object likely to be received, but sufficiently small, substantially to prevent egress of the sealing material.

The amount and geometry of the sealing material is also selected to match the size and number of elongate objects to be sealed.

Preferably means are provided firmly to secure the sealing arrangement according to the invention to the open end of the conduit to be sealed. Preferably cooperating friction locking elements are provided on the housing and on the conduit, for example, a groove on the outer surface of the conduit is arranged to cooperate with a flange on the housing of the sealing arrangement or vice versa.

Embodiments of the present invention will now be described with reference to the accompanying drawings, wherein:

Figures 1 is a perspective view showing a vault closure, the cable entries of which are to be sealed according to the invention.

Figure 2 is a perspective view showing a sealing arrangement according to the present invention.

Figure 3 is an enlarged view of the channel part of the sealing arrangement of Figure 2.

Figure 4a is an enlarged perspective view of the hinge used in the sealing arrangement of figure 2, and Figure 4b is a partial cross-section through the housing of Figure 2 showing the cooperation of that hinge with the housing.

Figure 5 shows the sealing arrangement of Figure 2 positioned on a cable entry of the vault closure of Figure 1;

Figures 6a, b and c show different divided retaining walls for use in the sealing arrangement of Figure 2: and

Figure 7 shows an alternative sealing arrangement according to the invention.

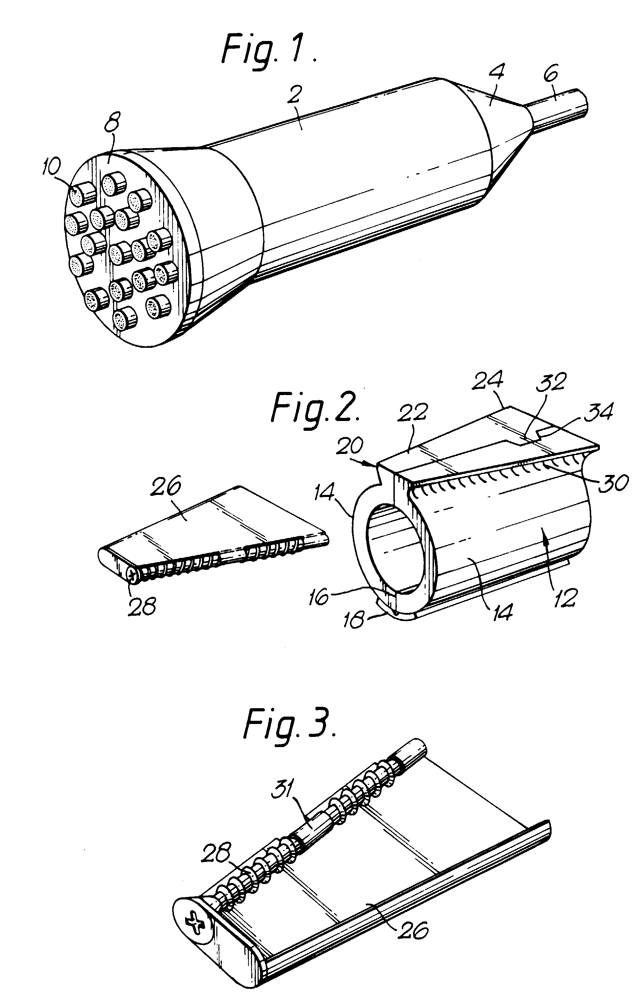

Referring to the drawings, Figure 1 shows a vault closure comprising a cylindrical housing 2 with a single opening 4 at one end for a large core cable 6, and a base plate 8 at the other end. The base plate 8 contain a plurality of apertures and associated tubular cable entry outlets 10 which are appropriately sized to receive a plurality of smaller cables entering the housing 2, for splicing to the main cable 6. The sealing arrangement of the present invention can be used to seal individual ones of the smaller cables to respective ones of the cable entry outlets 10.

Figure 2 shows the sealing arrangement 12 of the present invention, and Figure 3 shows part of that arrangement. The arrangement comprises a tubular housing which is longitudinally slit to form half-shells 14. On one side of the housing abutting edges 16 of the housing are hinged together by a flexible hinging strip 18. The strip 18 is described in more detail later. This hinge is applied in the factory and allows the housing to be opened in the field for positioning over the cable outlets 10. On the diametrically opposite side of the housing, abutting edges of the housing are provided with upstanding flanges 20. These are generally wedge shaped being narrower at one end 22 than at the other end 24. A correspondingly shaped channel 26 can be slid over the flanges 20 to hold the housing closed. The channel 26 is applied in the field by the installer. The channel 26 is provided with a screw threaded locking element 28 which can be turned to cooperate with corresponding screw threaded grooves 30 on one side of the one of the upstanding flanges 20. The screw element 28 is provided within and to one side of channel 26. The screw element 28 is pre-secured in the channel 26 by crimping part of the channel 31 over the screw element. This is best seen in Figure 3. This means the screw element is not detachable.

Figure 2 also shows an interlocking hinge 32 and groove 34 on the upstanding flanges 20 of the housing. These substantially prevent axial displacement of the half-shells 14. The sealing arrangement also includes sealing material within the half-shells, but this is not visible in Figure 2.

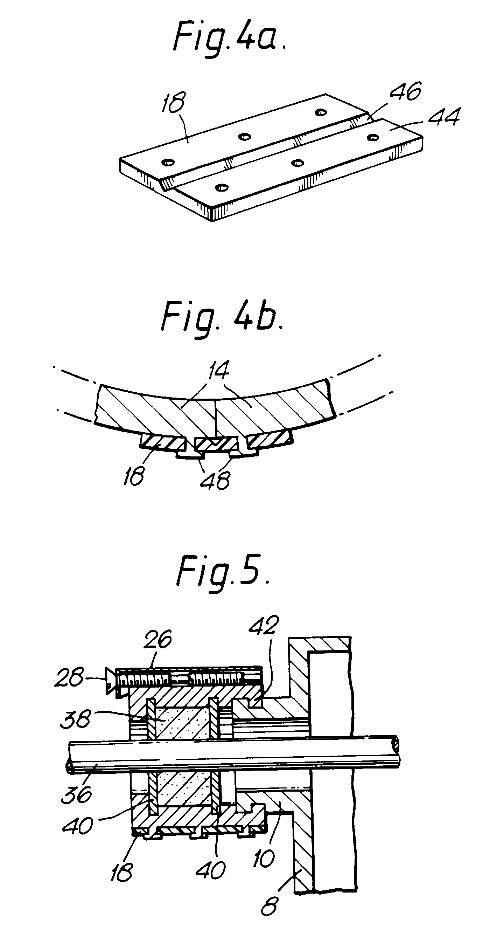

Figure 4a is an enlarged view of the hinge 18. It comprises a flexible polymeric material containing apertures 44 therein. It also includes a groove 46 to improve its flexibility. The apertures 44 cooperate with rivet shaped studs 48 on the housing half-shells 14, as shown in Figure 4b. Thus the hinge 18 is fixed to the housing half-shells, allowing them to be opened away from each other.

Figure 5 shows the sealing arrangement of Figures 2 and 3 installed on a cable outlet 10 of the vault closure of Figure 2, with a cable 36 entering the outlet. In addition to the features already described above, the sealing material 38 can also be seen in this Figure, as can retaining walls 40, which are positioned on either side of the sealing material to retain it between them. Each retaining wall 40 is provided in two parts, one located in each half-shell 14. Each retaining wall contains a central aperture, between the two parts of each retaining wall, through which the cable 36 passes. The Figure also shows a flange or collar 42 on the sealing arrangement which engages a groove in the cable entry outlet 10 of the vault closure, firmly to secure the sealing arrangement to the housing cable entry outlet 10.

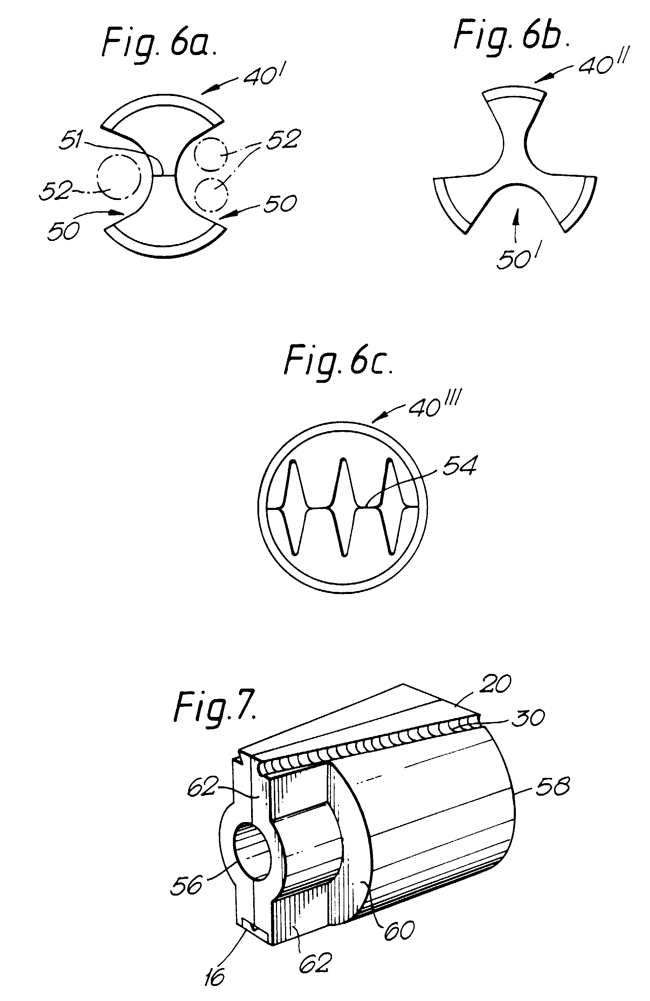

Figures 6a, b and c show alternative divided retaining walls 40' 40" and 40"', which can be used in place of the retaining walls 40 shown in Figure 5, where more than one entering cable is to be sealed. In Figure 6a the retaining wall is generally disc shaped but contains two indents 50 into which cables 52 (depicted by dotted lines) can be inserted. This allows two or more cables to be sealed by a single sealing arrangement. The retaining wall 50 is divided at line 51, centrally across the indented disc at its narrowest part. This allows each part to be located in a respective housing half-shell. One or more cables can be inserted in each indent 50, as shown in Figure 6a. Figure 6b shows an alternative configuration with three cable indents 50'. Figure 6c shows an alternative arrangement in which a divided or slotted retaining wall containing openings for several cables is shown. It contains a division 54 in the wall. This allows the two parts of the disc to be located in respective half-shells as in Figure 5 and Figure 6a. It also allows the wall to flex to accommodate various cable sizes and provides strain relief.

Figure 7 shows an alternative configuration of sealing arrangement. In this case the inlet 56 into one side of the sealing arrangement is smaller than the outlet 58 on the other side of the sealing arrangement. This situation may occur, for example, where cables are to be introduced into cable inlets of a vault closure, and the cables are of much smaller diameter than the vault closure cable inlets. in order that a simple two half-shell part hinged by a strip 16 and closed by a straight channel engaging flanges 20 can be used, as in the embodiments depicted in the previous Figures, a step 60 is made in the sealing arrangement. Thus flanges 62 extend from the small diameter tubular inlet 56 to the upstanding flanges 20 and to the hinge 16.

The above description is to specific embodiments only, and it will be appreciated that variations of each of the features may be made without departing from the scope of the invention as defined by the claims.

## Claims

1. A sealing arrangement (12) for sealing the open end of a conduit (10) to an elongate object (36), such as a cable or pipe, that is led therethrough, the arrangement comprising (a) a divided tubular housing (14), that is slit longitudinally to form two or more half- or part-shells, and is hinged along one longitudinal slit to allow the housing to be opened, (b) a channel shaped closure member (26) which, in use, holds together upstanding flanges (20) on abutting edges of the slit housing to close the housing and (c) sealing material contained within the housing, a locking member (28) being provided within the channel shaped closure member, which can be moved from a first position, in which the channel shaped closure member can be moved along the upstanding flanges on the housing, to a second position in which the locking member firmly secures the channel shaped closure member relative to the flanges of the housing, the locking member comprising a screw threaded element which can be rotated to secure the channel shaped closure member to the housing flanges, characterised in that at least one of the housing flanges comprises threaded grooves (30) which engage the turns of the screw threaded element when the screw threaded element is rotated.

2. A sealing arrangement (12) according to claim 1, wherein the screw threaded element (28) extends within the channel shaped closure member (26).

3. A sealing arrangement (12) according to claim 1 or claim 2, wherein the channel shaped closure member (26) is substantially flat and projects above the surface of the tubular body of the housing (14) by a distance which is less than 1/4, preferably less than 1/6, of the outer diameter of the tubular body of the housing.

4. A sealing arrangement (12) according to any preceding claim, wherein the hinging is provided by a separate hinging element (18) which comprises a flexible strip of material extending along the outer surface of the housing over abutting edges of the slit housing.

5. A sealing arrangement (12) according to claim 4, wherein the hinging element (18) comprises an apertured strip, and the tubular housing (14) is provided with rivet shaped stubs (48) projecting outwards from the housing and passing through the apertures of the strip thereby securing the strip to the housing.

6. A sealing arrangement (12) according to claim 4 or claim 5, wherein the hinging element (18) comprises a flexible, tear-resistant polymeric material.

7. A sealing arrangement (12) according to any one of claims 4 to 6, wherein the thickness of the hinging element (18) is less than 1/10 preferably less than 1/15 of the outer diameter of the tubular body of the housing (14).

8. A sealing arrangement (12) according to any preceding claim, wherein the upstanding flanges (20) on the housing (14) comprise cooperating features substantially to prevent relative axial movement between the housing parts.

9. A sealing arrangement (12) according to any preceding claim wherein retaining walls (40) are provided which span the inner diameter of the housing (14) on one or both sides of the sealing material, the retaining walls preferably being detachable.

10. A sealing arrangement (12) according to claim 9, wherein the retaining walls (40) contain one or more openings (50) to receive the elongate objects (36) to be sealed.

11. A sealing arrangement (12) according to claim 10, wherein the openings (50) are provided as indents from the edge of the retaining wall(s) (40).

## Patentansprüche

1. Dichtungsanordnung (12), um das offene Ende einer Leitung (10) an einem langgestreckten Objekt (36), wie etwa einem Kabel oder Rohr, das hindurchgeführt wird, abzudichten, wobei die Anordnung folgendes aufweist:
(a) ein geteiltes rohrförmiges Gehäuse (14), das in Längsrichtung geschlitzt ist, um zwei oder mehr Halb- oder Teilschalen zu bilden, und das entlang eines Längsschlitzes angelenkt ist, um ein Öffnen des Gehäuses zu ermöglichen,
(b) ein kanalförmiges Verschlußelement (26), das im Gebrauch hochstehende Flansche (20) an aneinanderstoßenden Rändern des geschlitzten Gehäuses zusammenhält, um das Gehäuse zu schließen, und
(c) in dem Gehäuse enthaltenes Dichtmaterial, wobei ein Verriegelungselement (28) in dem kanalförmigen Verschlußelement vorgesehen ist, das aus einer ersten Position, in der das kanalförmige Verschlußelement entlang den hochstehenden Flanschen an dem Gehäuse bewegt werden kann, in eine zweite Position bewegt werden kann, in dem das Verriegelungselement das kanalförmige Verschlußelement relativ zu den Flanschen des Gehäuses sicher festhält, wobei das Verriegelungselement ein Gewindeelement aufweist, das gedreht werden kann, um das kanalförmige Verschlußelement an den Gehäuseflanschen zu befestigen,
dadurch gekennzeichnet,
daß wenigstens einer der Gehäuseflansche Gewindenuten (30) aufweist, die mit den Windungen des Gewindeelements in Eingriff gelangen, wenn das Gewindeelement gedreht wird.

2. Dichtungsanordnung (12) nach Anspruch 1,
wobei das Gewindeelement (28) in dem kanalförmigen Verschlußelement (26) verläuft.

3. Dichtungsanordnung (12) nach Anspruch 1 oder 2,
wobei das kanalförmige Verschlußelement (26) im wesentlichen flach ist und über die Oberfläche des rohrförmigen Körpers des Gehäuses (14) um eine Distanz vorspringt, die kleiner als 1/4, bevorzugt kleiner als 1/6 des Außendurchmessers des rohrförmigen Körpers des Gehäuses ist.

4. Dichtungsanordnung (12) nach einem der vorhergehenden Ansprüche,
wobei die Anlenkung durch ein gesondertes Gelenkelement (18) vorgesehen ist, das einen flexiblen Materialstreifen aufweist, der entlang der äußeren Oberfläche des Gehäuses über aneinanderliegenden Rändern des geschlitzten Gehäuses verläuft.

5. Dichtungsanordnung (12) nach Anspruch 4,
wobei das Gelenkelement (18) einen Streifen mit Öffnungen aufweist und das rohrförmige Gehäuse (14) mit nietförmigen Stummeln (48) versehen ist, die von dem Gehäuse nach außen vorspringen und die Öffnungen des Streifens durchsetzen, so daß sie dadurch den Streifen an dem Gehäuse befestigen.

6. Dichtungsanordnung (12) nach Anspruch 4 oder 5,
wobei das Gelenkelement (18) ein biegsames, reißfestes polymeres Material aufweist.

7. Dichtungsanordnung (12) nach einem der Ansprüche 4 bis 6,
wobei die Dicke des Gelenkelements (18) weniger als 1/10, bevorzugt weniger als 1/15, des Außendurchmessers des rohrförmigen Körpers des Gehäuses (14) ausmacht.

8. Dichtungsanordnung (12) nach einem der vorhergehenden Ansprüche,
wobei die hochstehenden Flansche (20) an dem Gehäuse (14) zusammenwirkende Ausbildungen aufweisen, um eine relative Axialbewegung zwischen den Gehäuseteilen im wesentlichen zu verhindern.

9. Dichtungsanordnung (12) nach einem der vorhergehenden Ansprüche,
wobei Haltewände (40) vorgesehen sind, die den Innendurchmesser des Gehäuses (14) auf einer oder beiden Seiten des Dichtmaterials überbrücken, wobei die Haltewände bevorzugt abnehmbar sind.

10. Dichtungsanordnung (12) nach Anspruch 9,
wobei die Haltewände (40) eine oder mehrere Öffnungen (50) enthalten, um die abzudichtenden langgestreckten Objekte (36) aufzunehmen.

11. Dichtungsanordnung (12) nach Anspruch 10,
wobei die Öffnungen (50) als Aussparungen vom Rand der Haltewand bzw. der Haltewände (40) vorgesehen sind.

## Revendications

1. Montage d'étanchéité (12) pour rendre étanche l'extrémité ouverte d'une canalisation (10) par rapport à un objet de forme allongée (36), tel d'un câble ou un tuyau, disposé à l'intérieur de celle-ci, le montage se composant (a) d'un boîtier tubulaire divisé (14) qui est fendu longitudinalement pour former deux demi-coquilles ou segments de coquilles ou plus, et qui est articulé le long d'une fente longitudinale pour permettre au boîtier d'être ouvert, (b) d'un élément de fermeture en forme de U (26) qui, en service, maintient ensemble des brides verticales (20) sur des bords en contact du boîtier fendu pour fermer le boîtier et (c) d'un matériau d'étanchéité contenu dans le boîtier, un élément de verrouillage (28) étant prévu dans l'élément de fermeture en forme de U, qui peut être amené d'une première position, dans laquelle l'élément de fermeture en forme de U peut être déplacé le long des brides verticales du boîtier, à une seconde position dans laquelle l'élément de verrouillage maintient solidement l'élément de fermeture en forme de U par rapport aux brides du boîtier, l'élément de fermeture se composant d'un élément fileté que l'on peut faire tourner pour maintenir l'élément de fermeture en forme de U par rapport aux brides du boîtier, caractérisé en ce qu'au moins une des brides du boîtier comporte des gorges filetées (30) qui s'engagent sur les filets de l'élément fileté lorsque l'élément fileté tourne.

2. Montage d'étanchéité (12) selon la revendication 1, dans lequel l'élément fileté (28) s'étend à l'intérieur de l'élément de fermeture profilé en U (26).

3. Montage d'étanchéité (12) selon la revendication 1 ou la revendication 2, dans lequel l'élément de fermeture profilé en U (26) est sensiblement plat et fait saillie au-dessus de la surface du corps tubulaire du boîtier (14) dans une proportion qui est inférieure à 1/4, de préférence inférieure à 1/6ième du diamètre extérieur du corps tubulaire du boîtier.

4. Montage d'étanchéité (12) selon l'une quelconque des revendications précédentes, dans lequel l'articulation est assurée par un élément d'articulation (18) qui se compose d'une bande de matière flexible qui s'étend le long de la surface extérieure du boîtier au-dessus de bords en contact d'extrémité du boîtier fendu.

5. Montage d'étanchéité (12) selon la revendication 4, dans lequel l'élément d'articulation (18) se compose d'une bande comportant des ouvertures et le boîtier tubulaire (14) est muni de saillies en forme de rivet (48) faisant saillie vers l'extérieur du boîtier et traversant les ouvertures de la bande, fixant ainsi la bande contre le boîtier.

6. Montage d'étanchéité (12) selon la revendication 4 ou la revendication 5, dans lequel l'élément d'articulation (18) se compose d'un matériau polymère flexible résistant à l'arrachement.

7. Montage d'étanchéité (12) selon l'une quelconque des revendications 4 à 6, dans lequel l'épaisseur de l'élément d'articulation (18) est inférieure à 1/10ième, de préférence 1/15ième du diamètre extérieur du corps tubulaire du boîtier (14).

8. Montage d'étanchéité (12) selon l'une quelconque des revendications précédentes, dans lequel les brides verticales (20) du boîtier (14) comportent des caractéristiques à action conjuguée sensiblement pour éviter le déplacement axial relatif entre les éléments du boîtier.

9. Montage d'étanchéité (12) selon l'une quelconque des revendications précédentes, dans lequel des parois de retenue (40) sont prévues, qui s'étendent sur tout le diamètre intérieur du boîtier (14) sur un ou sur les deux côtés du matériau d'étanchéité, les parois de retenue étant de préférence amovibles.

10. Montage d'étanchéité (12) selon la revendication 9, dans lequel les parois de retenue (40) comportent une ou plusieurs ouvertures (50) pour recevoir des objets de forme allongée (36) devant être rendus étanches.

11. Montage d'étanchéité (12) selon la revendication 10, dans lequel les ouvertures (50) se présentent sous la forme d'encoches réalisées dans le bord de la ou des paroi(s) de retenue (40).
